Europäisches Patentamt

European Patent Office

Office européen des brevets

(19)

(11) **EP 0 672 082 B1**

(12) **FASCICULE DE BREVET EUROPEEN**

(45) Date de publication et mention
de la délivrance du brevet:
**10.06.1998  Bulletin 1998/24**

(51) Int Cl.⁶: **C08L 23/12**, C08L 23/10,
C08L 77/00, C08K 3/04,
C08K 3/16, G01T 1/203
// (C08L77/00, 23:12)

(21) Numéro de dépôt: 94928931.8

(22) Date de dépôt: **29.09.1994**

(86) Numéro de dépôt international:
**PCT/FR94/01140**

(87) Numéro de publication internationale:
**WO 95/09889 (13.04.1995 Gazette 1995/16)**

(54) **COMPOSITION DE POLYMERES EQUIVALENTE A UN TISSU BIOLOGIQUE; SON UTILISATION**

POLYMERZUSAMMENSETZUNG GLEICH EINEM BIOLOGISCHEN GEWEBE UND SEINE
VERWENDUNG

POLYMER COMPOSITION EQUIVALENT TO BIOLOGICAL TISSUES, AND UTILIZATION
THEREOF

(84) Etats contractants désignés:
**CH DE GB LI SE**

(30) Priorité: **01.10.1993  FR 9311711**

(43) Date de publication de la demande:
**20.09.1995  Bulletin 1995/38**

(73) Titulaire: **COMMISSARIAT A L'ENERGIE
ATOMIQUE
75015 Paris (FR)**

(72) Inventeurs:
• **BARTHE, Jean
F-91300 Massy (FR)**

• **BORDY, Jean-Marc
F-91240 Saint-Michel-sur-Orge (FR)**

(74) Mandataire: **Des Termes, Monique et al
Société Brevatome
25, rue de Ponthieu
75008 Paris (FR)**

(56) Documents cités:
FR-A- 2 068 732                   FR-A- 2 520 880
US-A- 3 005 794                   US-A- 3 536 914
US-A- 4 880 981

Printed by Jouve, 75001 PARIS (FR)

**Description**

La présente invention concerne une composition de polymères, équivalente au tissu biologique et présentant une très grande résistivité. L'invention concerne également l'utilisation de cette composition polymère dans la fabrication de la cathode d'un compteur proportionnel équivalent au tissu biologique, ainsi que des compteurs proportionnels équivalents au tissu biologique comprenant une cathode réalisée à l'aide de la composition polymère précitée.

Toute personne travaillant dans une centrale nucléaire ou au voisinage d'une source radioactive doit porter en permanence sur elle un dosimètre ou un compteur de mesure de la radioactivité. Ces appareils permettent, d'une part, de déterminer si cette personne a été exposée ou non à des radiations et d'autre part, de quantifier la dose absorbée et l'équivalent de dose. Ces compteurs sont de deux types, le premier type dit "passif" permettant uniquement d'enregistrer la quantité de radiations reçue mais nécessitant un traitement ultérieur de développement pour l'obtention des résultats et le deuxième type dit "actif" combiné avec un affichage permettant d'obtenir en temps réel, la dose de radiations absorbées.

Parmi ces compteurs actifs, il existe des compteurs proportionnels équivalents au tissu biologique, c'est-à-dire des compteurs destinés à simuler un volume de tissu biologique de quelques micromètres. Le terme tissu biologique a plusieurs acceptions ; on entend ici se rapporter exclusivement au tissu biologique reproduisant les muscles striés humains. D'une façon générale, ce type de compteur comprend une enceinte délimitée par une gaine formant une cathode. Cette gaine est réalisée dans un matériau équivalent au tissu biologique. L'enceinte est remplie d'un mélange gazeux qui doit lui même présenter des propriétés équivalentes au tissu biologique, afin que les interactions qui ont lieu dans ce compteur soient identiques à celles qui se produisent dans le tissu humain. Enfin, une anode est prévue au centre de cette enceinte. Cette anode est reliée à des moyens d'amplification du signal électrique fourni par ladite anode.

Pour qu'un matériau soit équivalent au tissu biologique, il faut que sa composition soit aussi proche que possible de celle de la norme du tissu biologique définie par l'ICRU (International Commission on Radiation Units and measurements) en 1964.

La composition atomique massique théorique d'un matériau équivalent au tissu biologique est la suivante :

- hydrogène : 10,20%
- carbone : 12,30%
- azote : 3,50%
- oxygène : 72,90%
- sodium : 0,08%
- magnésium : 0,02%
- phosphore : 0,20%
- soufre : 0,50%
- potassium : 0,30%
- calcium : 0,07%

Parmi ces constituants, l'hydrogène et l'azote ont une importance toute particulière vis-à-vis des interactions des neutrons avec le matériau équivalent au tissu biologique. On s'attache donc en priorité au respect de leur pondération. On conserve également le numéro atomique moyen du matériau obtenu, de manière à obtenir une bonne équivalence au tissu biologique du matériau lors de son interaction avec des photons. En effet, les photons interagissent principalement avec les électrons. Le nombre d'interaction est, en première approximation, proportionnel au nombre d'électrons contenus dans la matière. Le numéro atomique moyen est calculé selon la formule $Z= (\Sigma_i n_i Z_i)/(\Sigma_i n_i)$, $n_i$ représentant le nombre d'atomes de constituant i par unité de masse et $Z_i$ le numéro atomique du constituant i. Ce numéro atomique moyen correspond au nombre moyen d'électrons "attachés" à un atome. C'est donc un indicateur quantitatif global de l'interaction des photons avec la matière.

On connaît déjà d'après l'art antérieur, un matériau équivalent au tissu biologique, utilisé couramment pour fabriquer certaines parties constitutives de compteurs proportionnels équivalents au tissu biologique. Ce matériau est un polymère conducteur connu sous la dénomination A150, (marque déposée), mis au point par F. SHONKA. Il est décrit notamment dans un article de James B. Smather et Victor A. Ohe, "Composition of A-150 tissue equivalent plastic", Medical Physics, vol. 4, n° 1, Jan-Fév. 1977, Am. Assoc. Phys. Med.. Ce matériau est formé à base de polyéthylène (45,14% en poids), de polyamide : nylon Zytel 69 de formule $C_{12}H_{22}O_2N_2$, (35,22% en poids), de noir de carbone (16,06% en poids) et de fluorure de calcium, $CaF_2$ (3,58% en poids). Le procédé de fabrication de ce matériau est également décrit dans le brevet US 3 005 794.

La composition atomique massique du A150 est la suivante :

- hydrogène : 10,10%

- carbone : 77,60%
- azote : 3,50%
- oxygène : 5,20%
- calcium : 1,80%
- fluor : 1,80%

Ce matériau polymère est conducteur et sa résistivité est donc faible, de l'ordre de 30 à 70 Ohms.cm.

Or, dans le cadre de la fabrication et de la mise en oeuvre des compteurs proportionnels équivalents au tissu biologique, il est apparu utile de pouvoir disposer d'un matériau qui soit non seulement équivalent au tissu biologique mais qui présente également une très grande résistivité, de façon à réduire les inhomogénéités du champ électrique dans ces compteurs. Un tel matériau pourrait ainsi être mis en oeuvre dans les compteurs de géométrie monocellulaire cylindrique ou dans les compteurs de géométrie multicellulaire, de structure plus complexe mais qui sont nécessaires à l'élaboration de dosimètres individuels.

En conséquence, le but de l'invention est de mettre au point une nouvelle composition de polymères présentant non seulement une équivalence au tissu biologique mais également une très grande résistivité.

Ce but est atteint à l'aide d'une composition de polymères caractérisée en ce qu'elle est formée à partir d'un polyamide, de polypropylène, d'épolène, de charges et de noir de carbone et en ce qu'elle présente une composition atomique massique telle que l'hydrogène est compris entre 6 et 14%, le carbone entre 55,5 et 86,5%, l'azote entre 2,5 et 4,5%, l'oxygène entre 1,5 et 7,5%, le calcium entre 1,5 et 9,5% et le fluor entre 1 et 9%, la somme de la quantité de carbone, d'oxygène et de fluor dans la composition atomique totale étant comprise entre 72 et 90%.

Une telle composition de polymères présente une résistivité comprise entre 10 M Ohms.cm et 40 G Ohms.cm.

L'invention concerne également l'utilisation de cette composition de polymères dans la fabrication d'au moins une partie de la cathode d'un compteur proportionnel équivalent au tissu biologique.

Grâce aux caractéristiques de résistivité de la composition de polymères, il est possible de fabriquer une partie de la cathode d'un compteur proportionnel et d'obtenir à l'intérieur de ce compteur, un champ électrique très homogène.

Par ailleurs, l'invention concerne également un compteur proportionnel équivalent au tissu biologique, de type monocellulaire de préférence cylindrique, comprenant une enceinte fermée, définie par une cathode comprenant un corps de forme allongée et deux bases obturant les deux extrémités de ce corps, l'enceinte étant remplie d'un gaz équivalent au tissu biologique et étant traversée lontitudinalement par une anode. Selon les caractéristiques de l'invention, les deux bases de la cathode sont réalisées dans la composition de polymères précitée.

Enfin, l'invention concerne un compteur proportionnel équivalent au tissu biologique, de type multicellulaire, comprenant une enceinte fermée, définie par un cadre et au moins deux ensembles, chaque ensemble est composé d'un bloc disposé entre deux plaques conductrices, la plaque dirigée vers l'intérieur de ladite enceinte et ledit bloc étant percés de façon à définir une pluralité de cellules débouchant à l'intérieur de l'enceinte, cette enceinte étant remplie d'un gaz équivalent au tissu biologique et traversée par au moins une anode. Selon les caractéristiques de l'invention, le bloc est réalisé dans la composition de polymères précitée.

L'invention sera mieux comprise à la lecture de la description suivante d'un mode de réalisation de l'invention donné à titre d'exemple illustratif et non limitatif, cette description étant faite en faisant référence aux dessins joints, dans lesquels :

- la figure 1 est un schéma illustrant en coupe longitudinale un mode de réalisation d'un compteur de structure monocellulaire cylindrique, équivalent au tissu biologique selon l'invention,
- la figure 2 est un schéma en trois dimensions illustrant la variation du champ électrique à l'intérieur d'un compteur monocellulaire équivalent au tissu biologique dont une partie de la cathode est formée dans un matériau polymère conducteur de l'art antérieur,
- la figure 3 représente la distribution du champ électrique en deux dimensions pour le même compteur que celui de la figure 2,
- les figures 4 et 5 sont respectivement identiques aux figures 2 et 3 précédentes, si ce n'est qu'une partie de la cathode du compteur équivalent au tissu biologique est formée de la composition de polymères de très grande résistivité selon l'invention,
- la figure 6 est un schéma illustrant en coupe et en perspective, un compteur équivalent au tissu biologique, de structure multicellulaire.

La composition de polymères équivalente au tissu biologique, selon l'invention, a été fabriquée à partir d'un mélange de polymères et notamment de polyamide, de polypropylène et d'épolène. Ce mélange de polymères a en outre été complété par l'addition de charges et de charges conductrices, afin d'ajuster le nombre atomique dans le produit final et d'obtenir un produit qui simultanément respecte les exigences de l'ICRU et présente une très grande résistivité.

Le polyamide utilisé dans ladite composition de polymères est de préférence celui présentant la formule générale

EP 0 672 082 B1

[-(CH$_2$)-CO-NH-]$_n$. Ce polyamide est connu sous la dénomination PA12 VESTAMID L2101, (marque déposée). Ce produit est commercialisé par exemple par la Société CABOT (Pays-Bas). Sa composition atomique massique est la suivante :

- azote : : 7,1%
- hydrogène : 11,7%
- oxygène : 8,1%
- carbone : 73,1%

Ce polyamide étant le seul parmi les polymères utilisés a être constitué d'azote, il déterminera la concentration de cet élément chimique dans le produit final. En conséquence, afin de respecter le pourcentage de l'azote défini par l'ICRU dans un tissu équivalent au tissu biologique, (c'est-à-dire 3,5%), on utilisera environ 49,3% de ce polyamide. Toutefois, comme cela sera précisé et détaillé ultérieurement, le produit utilisé est rarement pur et la présence d'impuretés dans le polyamide peut faire varier le pourcentage de polyamide utilisé, afin de respecter le pourcentage atomique massique de l'azote dans la composition finale.

Le polypropylène [-CH$_2$-CH(CH$_3$)-]$_n$ utilisé est connu sous la dénomination VESTOLEN 8400, commercialisé, par exemple, par la Société CABOT (Pays-Bas). Ce produit possède un point de fusion proche du polyamide précité ce qui facilite le mélange de ces deux produits.

On a également utilisé dans la composition de polymères, de l'épolène qui est un polypropylène mélangé avec environ 1% d'acide carboxylique. L'épolène permet d'éviter la séparation des phases entre deux polymères non missibles tels que le polypropylène et le polyamide précités.

En outre, on a également ajouté à ce mélange de trois polymères, une charge ayant pour fonction d'ajuster le numéro atomique du produit final, à celui du tissu défini par l'ICRU, cette condition étant importante pour obtenir l'équivalence au tissu biologique vis-à-vis des photons. Cette charge peut être choisie, par exemple parmi le fluorure de calcium : CaF$_2$ ou le carbonate de calcium : CaCO$_3$.

Enfin, afin d'obtenir un polymère conducteur, il convient d'ajouter à ce mélange une charge conductrice. Cette charge conductrice est de préférence du noir de carbone. Dans les divers essais effectués, ce noir de carbone a été ajouté soit sous forme de poudre libre introduire dans le mélange de polymères, soit remplacé par du polypropylène directement chargé en noir de carbone.

Dix compositions de polymères différentes ont ainsi été réalisées en faisant varier les pourcentages des différents constituants précités. Les compositions exactes sont données dans le tableau 1 qui sera détaillé ci-après.

Au cours des différents essais, on a pu constater que l'épolène permettait d'obtenir une meilleure homogénéisation du produit. Parmi les dix compositions réalisées, celles comprenant le noir de carbone sous forme de poudre étaient beaucoup plus homogènes que les compositions à base de polypropylène chargé en noir de carbone. Cette différence est vraisemblablement due au fait que la charge constituée par le fluorure de calcium ou le carbone de calcium se mélange mieux au noir de carbone dans le premier cas que dans le deuxième.

Par ailleurs, la résistivité de ces différentes compositions a été testée.

La mesure de la résistivité a été effectuée en suivant la norme NFTS1-189 qui concerne la mesure de la résistivité des matières plastiques conductrices. Cette mesure est basée sur le principe consistant à faire passer un courant continu stable, d'intensité I, entre les deux extrémités d'une plaquette échantillon formée dans le matériau à analyser. Au moyen d'un potentiomètre, on mesure la chute de tension AU entre les deux électrodes placées aux deux extrémités de la plaquette échantillon. La résistance R de la proportion d'échantillon testée, placée entre les deux électrodes de contact, est donnée par la formule :

$$R = \Delta U / I.$$

Cette résistance est indépendante de la résistance des électrodes de mesure.

Pour chacune des dix compositions précitées, on a utilisé une plaquette échantillon de 10 mm de largeur, de 70 à 150 mm de longueur et de 3 à 4 mm d'épaisseur, avec une tolérance d'uniformité d'épaisseur de 5%. Après avoir été préparée, chaque plaquette échantillon a été laissée à température ambiante et dans des conditions d'humidité ambiante pendant au moins 16 heures. Pour chaque test, trois plaquettes de mêmes dimensions ont été préparées dans chacune des directions perpendiculaires, (longitudinale et transversale). Ces trois plaquettes ont ensuite été soumises au test de mesure de la résistivité.

Le calcul de la résistivité $\rho$ est donné par la formule suivante :

$$\rho = (R \times A) / d$$

4

dans laquelle R représente la résistance de la plaquette (exprimée en Ohms), A l'aire de la section transversale de ladite plaquette (exprimée en $cm^2$) et d la distance entre les deux électrodes de mesure, (exprimées en cm). Les résultats sont donnés dans le tableau 1 ci-après.

Tableau 1

| numéro de la plaquette échantillon | Composition chimique de la composition de polymères | Résistance (Ohms) | Résistivité (Ohms.cm) |
|---|---|---|---|
| 1 | PA12 : 49,3%<br>PP : 29,98%<br>EPO : 1%<br>NC : 19,72% | $1,1.10^{12}$<br>$1,1.10^{12}$<br>$1,1.10^{12}$<br>$1,1.10^{12}$<br>$1,1.10^{12}$<br>$1,1.10^{12}$ | $3,3.10^{10}$<br>$3,3.10^{10}$<br>$3,3.10^{10}$<br>$3,3.10^{10}$<br>$3,3.10^{10}$<br>$3,3.10^{10}$ |
| 2 | PA12 : 49,3%<br>PP : 30,98%<br>EPO : 1%<br>NC : 5%<br>$CaF_2$: 13,72% | $1,3.10^{12}$<br>$1,3.10^{12}$<br>$1,3.10^{12}$<br>$1,3.10^{12}$<br>$1,3.10^{12}$<br>$1,3.10^{12}$ | $3,9.10^{10}$<br>$3,9.10^{10}$<br>$3,9.10^{10}$<br>$3,9.10^{10}$<br>$3,9.10^{10}$<br>$3,9.10^{10}$ |
| 3 | PA12 : 49,3%<br>PP : 30,98%<br>EPO : 1%<br>NC : 8%<br>$CaF_2$ : 10,72% | $1,3.10^{12}$<br>$1,3.10^{12}$<br>$1,3.10^{12}$<br>$1,3.10^{12}$<br>$1,3.10^{12}$<br>$1,3.10^{12}$ | $3,9.10^{10}$<br>$3,9.10^{10}$<br>$3,9.10^{10}$<br>$3,9.10^{10}$<br>$3,9.10^{10}$<br>$3,9.10^{10}$ |
| 4 | PA12 : 49,3%<br>PP : 30,98%<br>EPO : 1%<br>NC : 10%<br>$CaF_2$: 8,72% | $1,3.10^{12}$<br>$1,3.10^{12}$<br>$1,3.10^{12}$<br>$1,3.10^{12}$<br>$1,3.10^{12}$<br>$1,3.10^{12}$ | $3,9.10^{10}$<br>$3,9.10^{10}$<br>$3,9.10^{10}$<br>$3,9.10^{10}$<br>$3,9.10^{10}$<br>$3,9.10^{10}$ |
| 5 | PA12 : 51,62%<br>PPNC1 ; 32,61%<br>EPO :1%<br>$CaF_2$: 14, 77% | $60.10^9$<br>$20.10^9$<br>$40.10^9$<br>$150.10^9$<br>$80.10^9$<br>$130.10^9$ | $1,8.10^9$<br>$6.10^8$<br>$1,2.10^9$<br>$4,5.10^9$<br>$2,4.10^{10}$<br>$3,9.10^9$ |
| 6 | PA12 : 51,62%<br>PPNC1 ; 32,61%<br>EPO : 1%<br>$CaCO_3$ : 14,77% | $100.10^9$<br>$50.10^9$<br>$130.10^9$<br>$70.10^9$<br>$90.10^9$<br>$100.10^9$ | $3.10^9$<br>$1,5.10^9$<br>$3,9.10^9$<br>$2,1.10^9$<br>$2,7.10^9$<br>$3.10^9$ |
| 7 | PA12 : 51,62%<br>PPNC2 : 30,59%<br>EPO : 1%<br>$CaF_2$: 16,79% | $65.10^9$<br>$85.10^9$<br>$55.10^9$<br>$80.10^9$<br>$35.10^9$<br>$45.10^9$ | $1,95.10^9$<br>$2,55.10^9$<br>$1,65.10^9$<br>$2,4.10^9$<br>$1,05.10^9$<br>$1,35.10^9$ |
| | | $110.10^9$ | $3,3.10^9$ |

Tableau 1   (suite)

| numéro de la plaquette échantillon | Composition chimique de la composition de polymères | Résistance (Ohms) | Résistivité (Ohms.cm) |
|---|---|---|---|
| 8 | PA12 : 51,62%<br>PPNC2 : 30,59%<br>EPO : 1%<br>$CaCO_3$ : 16,79% | $40.10^9$<br>$80.10^9$<br>$120.10^9$<br>$135.10^9$<br>$70.10^9$ | $1,2.10^9$<br>$2,4.10^9$<br>$3,6.10^9$<br>$4,05.10^9$<br>$2,1.10^9$ |
| 9 | PA12 : 52,52%<br>PPNC1 : 32,44%<br>EPO : 1%<br>$CaF_2$: 14,64% | $20.10^9$<br>$40.10^9$<br>$5.10^9$<br>$25.10^9$<br>$10.10^9$<br>$50.10^9$ | $6.10^8$<br>$1,2.10^8$<br>$1,5.10^8$<br>$7,5.10^8$<br>$3.10^8$<br>$1,5.10^8$ |
| 10 | PA12 : 52,52%<br>PPNC2 : 28,46%<br>EPO : 1%<br>$CaF_2$: 18,02% | $10.10^9$<br>$20.10^9$<br>$15.10^9$<br>$20.10^9$<br>$25.10^9$<br>$10.10^9$ | $3.10^8$<br>$6.10^8$<br>$4,5.10^8$<br>$6.10^8$<br>$7,5.10^8$<br>$3.10^8$ |
| PA12 : polyamide 12<br>EPO : épolène<br>PP : polyprolylène (85,72% C, 14,28% H)<br>NC : noir de carbone<br>PPNC1 ou PPNC2 : polypropylène chargé en noir de<br>carbone (PPNC1 : 87,38%, 12,14% H et PPNC2 : 86,02% C, 13,78% H). | | | |

Les meilleurs résultats de résistivité sont obtenus avec les échantillons 1 à 4. Ce sont des échantillons qui comportent le noir de carbone sous forme de poudre libre et non pas directement inclus dans le polypropylène. En outre, ces résultats sont relativement homogènes.

En ce qui concerne les échantillons 5 à 10, on constate que les valeurs de résistivité sont beaucoup plus faibles et surtout que ces valeurs ne sont pas homogènes. Cela s'explique par le fait qu'il est plus facile de mélanger trois produits distincts comme ceci est le cas pour les essais 1 à 4 que de mélanger d'abord deux produits entre eux, (c'est-à-dire le polypropylène et le noir de carbone) puis d'y greffer un troisième (PA12), comme ceci est le cas pour les essais 5 à 10.

Les échantillons 1 à 4 ont ensuite été soumis à des analyses chimiques, afin de connaître leur composition atomique massique.

L'échantillon 2 a été retenu comme répondant le mieux aux objectifs fixés par l'invention en ce qui concerne sa composition atomique et sa résistivité. Cet échantillon 2 présente la composition atomique massique suivante :

- hydrogène :10,3%
- carbone : 71%
- azote : 3,5%
- oxygène :4, 5%
- calcium : 5,5%
- fluor : 5,2%.

La résistivité de cette composition de polymère est de l'ordre de 5 G.Ohms.cm et son point de fusion est compris entre 150 et 180°C.

Toutefois, les échantillons 3 et 4 sont également intéressants. En conséquence on peut définir la composition de polymères d'une façon plus générale par les gammes de composition atomique suivantes :

- hydrogène : 6 à 14% ou de préférence 8 à 12%,
- carbone : 55,5 à 86,5% ou de préférence 63,5 à 78,5%

- azote : 2,5 à 4,5% ou de préférence 3 à 4%
- oxygène : 1,5 à 7,5% ou de préférence 3 à 6%
- calcium : 1,5 à 9,5% ou de préférence 3,5 à 7,5%
- fluor : 1 à 9% ou de préférence 3 à 7%.

On veillera en outre à ce que la somme de la quantité de carbone, d'oxygène et de fluor dans la composition atomique totale soit comprise dans le premier cas entre 76,5 et 85,5% environ et dans le deuxième cas entre 72 et 90%.

Les compositions polymères entrant dans ces gammes de valeur répondent de manière satisfaisante aux prescriptions de l'ICRU et présentent une grande résistivité, de l'ordre de 10 M Ohms.cm à 40 G Ohms.cm.

Lors de la fabrication du polymère résistif, on remarque que les polypropylènes et les polyamides se mélangent mal. Dès lors, les polymères obtenus ne sont pas homogènes. En ajoutant de l'épolène on évite la séparation des phases entre les deux polymères non miscibles (polypropylène et polyamide) de sorte que le produit obtenu en fin de fabrication est homogène. L'homogénéité du mélange n'est cependant jamais parfaite et jamais identique d'une fabrication à une autre. La composition atomique des pertes de matière tout au long du processus de fabrication n'est donc pas quantifiable, et il ne peut exister de correspondance théorique exacte entre les pourcentages atomiques massiques de la composition finale du polymère et les pourcentages des différents produits utilisés pour le fabriquer. De même, les constituants du polymère ont des impuretés, celles-ci ne sont pas prises en compte dans les formules chimiques des différents constituants de sorte que les calculs qui permettent de déterminer les pondérations des constituants sont entachés d'erreurs qui sont corrigées empiriquement lors de la fabrication, en vue d'obtenir la composition atomique massique désirée.

La composition de polymères équivalente au tissu biologique selon l'invention peut être utilisée dans la fabrication de certaines parties d'un compteur proportionnel équivalent au tissu biologique, que ce compteur soit du type monocellulaire ou du type multicellulaire.

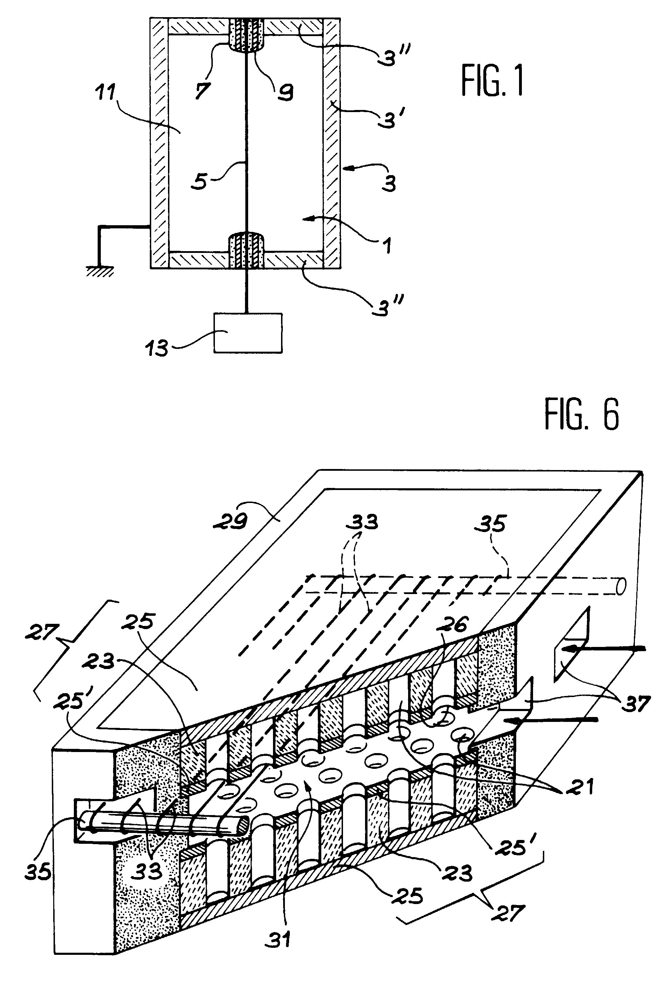

Un exemple de compteur proportionnel équivalent au tissu biologique de type monocellulaire est illustré sur la figure 1 jointe. Ce compteur est destiné à simuler un volume de tissu biologique de quelques micromètres. Ce compteur comprend une enceinte 1, définie par une gaine 3 en forme de cylindre, mais qui pourrait éventuellement prendre une autre forme. Cette gaine 3 joue le rôle de cathode. En outre, une anode 5 est disposée selon l'axe longitudinal de ladite gaine cylindrique 3. Cette anode 5 est réalisée dans un matériau équivalent au tissu biologique et conducteur. La cathode 3 comprend deux parties, un corps cylindrique 3' et deux bases 3" placées aux deux extrémités de la cathode 3. L'anode 5 est isolée électriquement de la base 3" de la cathode par un isolant 7 et un anneau de garde 9. Cet anneau de garde 9 a pour fonction de collecter les charges électriques statiques avant qu'elles n'atteignent l'anode 5 où elles risqueraient d'induire des impulsions électriques parasites. Enfin, l'enceinte 1 est remplie d'un mélange gazeux 11 qui lui même doit avoir une composition équivalente au tissu biologique.

En outre, la cathode 3 est reliée à la masse tandis que l'anode 5 est reliée à des moyens d'amplification 13 du signal électrique fourni par ladite anode.

Le fonctionnement de ce compteur va être rappelé rapidement ci-après.

Lors d'une exposition de ce compteur, à un champ de rayonnement mixte comprenant des photons et des neutrons, ceux-ci interagissent avec le gaz 11 et la cathode 3, en donnant naissance à des particules chargées (électrons et noyaux de recul). Une partie de ces particules chargées, créées au niveau de la cathode 3, 3', 3" traverse le gaz 11.

Les phénomènes utilisés pour la détection sont l'ionisation et l'excitation du gaz 11. L'interaction d'une particule chargée avec les atomes de gaz, produit localement un certain nombre de paires d'ions, qui, en l'absence d'un champ électrique, (c'est-à-dire si le potentiel appliqué à l'anode est le même que celui appliqué à la cathode), se recombinent. Par contre, si le gaz 11 est placé dans un champ électrique, (c'est-à-dire si le potentiel appliqué à l'anode 5 est supérieur à celui appliqué à la cathode 3, les ions positifs formés migrent vers la cathode 3, 3', 3" alors que les électrons migrent vers l'anode 5 en traversant une zone où le champ électrique est de plus en plus intense. Au fur et à mesure de son déplacement, l'électron est accéléré, il peut alors ioniser et exciter les atomes du gaz 11. Les électrons ainsi créés sont accélérés à leur tour. Une avalanche de TOWNSEND se produit autour de l'anode 5. L'interaction d'une particule avec le compteur se traduit par une impulsion électrique recueillie aux bornes du compteur et dont l'amplitude est proportionnelle au nombre des électrons recueillis.

L'interaction des particules chargées avec le gaz 11 peut se produire à n'importe quel endroit dans tout le volume de gaz. Il faut donc que la variation du champ électrique à l'intérieur de l'enceinte soit la plus homogène possible. Cela est réalisable en utilisant la composition de polymères selon l'invention pour fabriquer la cathode 3 ou plus précisément une partie de celle-ci.

Des calculs ont été effectués en utilisant un compteur équivalent au tissu biologique, monocellulaire, cylindrique dont les bases 3" ont été réalisées soit dans un matériau équivalent au tissu biologique mais conducteur, du type A150 (marque déposée), soit dans la composition de polymères équivalente au tissu biologique, de grande résistivité, selon l'invention.

Pour mettre en évidence l'intérêt du changement de matériau dans le compteur équivalent au tissu biologique, la distribution du champ électrique à l'intérieur de ce compteur a été mesurée dans les deux cas.

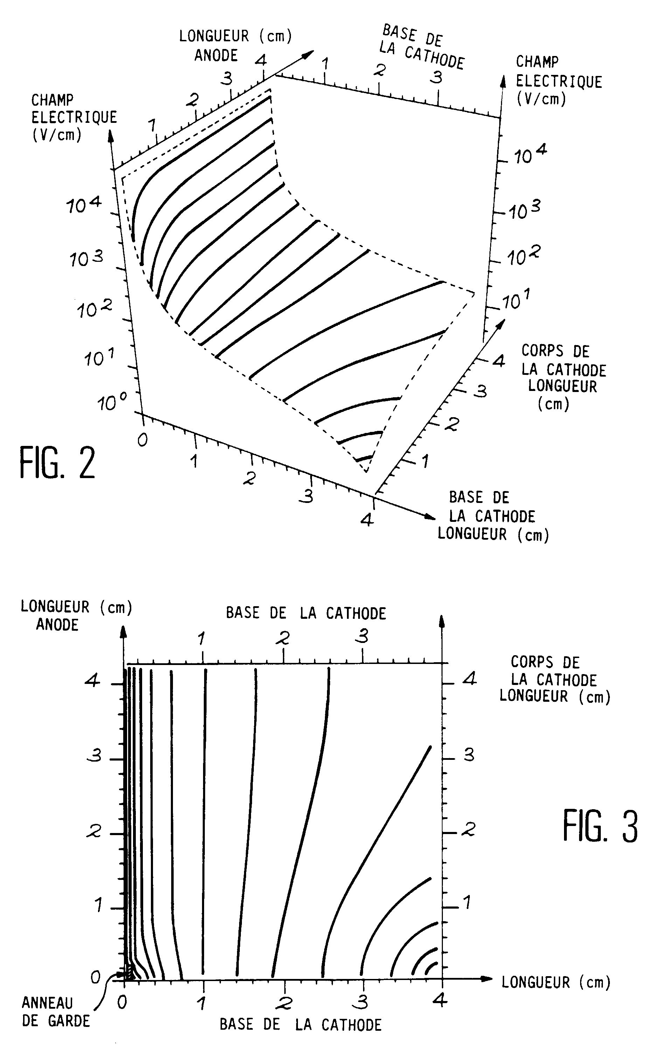

Les résultats illustrés en figure 2 et 3 correspondent à ceux obtenus lorsque les bases 3" de la cathode 3 sont réalisées dans le matériau équivalent au tissu biologique conducteur, connu de l'art antérieur.

La figure 2 correspondant aux lignes de champ électrique en trois dimensions et la figure 3 en deux dimensions. Les calculs ont été réalisés alors que les potentiels étaient respectivement de OV à la cathode 3', 3", de 600V à l'anode 5 et de 300V à l'anneau de garde 9.

On observe une déformation du champ électrique aux abords des bases 3" du cylindre, ce qui a pour effet de diminuer le pouvoir de résolution de l'appareil.

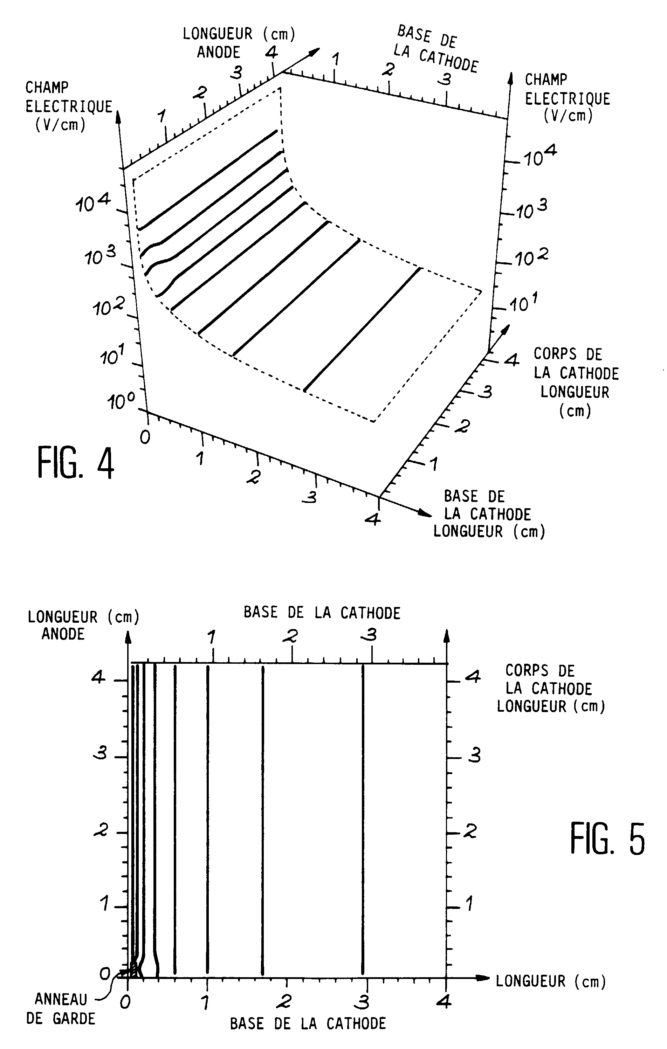

Par contre, et comme illustré aux figures 4 et 5 jointes, (mesures réalisées dans des conditions identiques), on constate que l'emploi de la composition polymère selon l'invention permet d'éviter cette déformation du champ électrique.

L'utilisation de la nouvelle composition de polymères selon l'invention dans la fabrication d'un compteur équivalent au tissu biologique de type multicellulaire va maintenant être décrite en faisant référence à la figure 6.

Le fonctionnement de ce compteur est identique à ce qui a été décrit précédemment pour le compteur monocellulaire.

Chaque cellule 21 du compteur multicellulaire est un canal cylindrique creusé dans un bloc 23 de matériau polymère équivalent au tissu biologique de grande résistivité selon l'invention. Une pluralité de cellules est ainsi prévue. Celles-ci sont disposées sous forme de rangées parallèles. Le bloc 23 est maintenu en "sandwich" entre deux plaques 25, 25' d'un matériau conducteur équivalent au tissu biologique. Les plaques 25' dirigées vers l'intérieur du compteur sont perforées par des orifices 26 prévus dans le prolongement des cellules 21. Un tel ensemble est référencé 27. Deux ensembles 27 sont superposés et assemblés dans un cadre 29, de façon à définir entre eux une enceinte 31. Le cadre 29 est de préférence réalisé en polyéthylène.

Les anodes sont constituées par des fils 33 tendus dans l'enceinte 31 à égale distance entre les deux ensembles 27. Chaque anode est tendue devant une rangée de cellules 21, de façon à passer au niveau du diamètre de celles-ci. Les fils d'anode 33 sont maintenus aux deux extrémités du cadre 29 par un support anodique 35.

En outre, plusieurs entrées 37 sont prévues sur au moins une face latérale du cadre 29 pour permettre le remplissage de l'enceinte 31 et des cellules 21, par un gaz équivalent au tissu biologique.

La composition polymère selon l'invention utilisée pour former le bloc 23 permet de créer un champ électrique parallèle à l'axe longitudinal de la cellule 21 ce qui n'aurait pas été possible avec un matériau équivalent au tissu biologique conducteur.

Le champ électrique à l'intérieur des cellules 21 permet d'éviter la recombinaison des charges électriques (ions et électrons) créés dans le volume du compteur lors de l'irradiation. Ce résultat est obtenu en utilisant le polymère selon l'invention (résistivité de l'ordre de quelques GΩ.cm). Les extrémités de chaque cellule 21 sont portées aux potentiels de V1 et V2 (V2>V1) à l'aide des deux plaques 25, (la plaque supérieure 25 sur la figure 6 étant portée à un potentiel V1 et la plaque inférieure 25' à un potentiel V2).

La grande résistivité du polymère permet de limiter le courant électrique qui le traverse, donc de réduire la dissipation de chaleur et la consommation électrique du compteur.

**Revendications**

1.  Composition de polymères équivalente au tissu biologique et présentant une grande résistivité, caractérisée en ce qu'elle est formée à partir d'un polyamide, de polypropylène, d'épolène , de charges et de noir de carbone et en ce qu'elle présente une composition atomique massique telle que l'hydrogène est compris entre 6 et 14% ,le carbone entre 55,5 et 86,5%, l'azote entre 2,5 et 4,5% , l'oxygène entre 1,5 et 7,5%, le calcium entre 1,5 et 9,5% et le fluor entre 1 et 9% , la somme de la quantité de carbone, d'oxygène et de fluor dans la composition atomique totale étant comprise entre 72 et 90% .

2.  Composition de polymères selon la revendication 1, caractérisée en ce que sa composition atomique massique est telle que l'hydrogène est compris entre 8 et 12%, le carbone entre 63,5 et 78,5%, l'azote entre 3 et 4%, l'oxygène entre 3 et 6% , le calcium entre 3,5 et 7,5% et le fluor entre 3 et 7%, la somme de la quantité de carbone, d'oxygène et de fluor dans la composition totale étant comprise entre 76,5 et 85,5% .

3.  Composition de polymères selon la revendication 2, caractérisée en ce que sa composition atomique massique est d'environ 10,3% d'hydrogène, 71% de carbone, 3,5% d'azote, 4,5% d'oxygène, 5,5% de calcium et 5,2% de fluor.

4.  Composition de polymères selon la revendication 1, caractérisée en ce que le noir de carbone se présente sous forme de poudre libre.

5. Composition de polymères selon l'une quelconque des revendications précédentes, caractérisée en ce que sa résistivité est comprise entre 10 M Ohms.cm et 40 G Ohms.cm.

6. Composition de polymères selon la revendication 1, caractérisée en ce que le polyamide répond à la formule chimique $[-(CH_2)-CO-NH-]_n$.

7. Composition de polymères selon la revendication 1, caractérisée en ce que le polypropylène répond à la formule chimique $[-CH_2-CH(CH_3)-]_n$.

8. Composition de polymères selon la revendication 1, caractérisée en ce que la charge est du fluorure de calcium.

9. Utilisation de la composition de polymères selon l'une quelconque des revendications 1 à 8 dans la fabrication d'au moins une partie de la cathode (3", 23) d'un compteur proportionnel équivalent au tissu biologique.

10. Compteur proportionnel équivalent au tissu biologique, de type monocellulaire, comprenant une enceinte (1) fermée, définie par une cathode (3) comprenant un corps (3') de forme allongée et deux bases (3") obturant les deux extrémités de ce corps, l'enceinte (1) étant remplie d'un gaz (11) équivalent au tissu biologique et étant traversée longitudinalement par une anode (5), caractérisé en ce que les deux bases (3") sont réalisées dans une composition de polymères selon l'une quelconque des revendications 1 à 8.

11. Compteur proportionnel équivalent au tissu biologique, de type multicellulaire, comprenant une enceinte (31) fermée, définie par un cadre (29) et au moins deux ensembles (27), chaque ensemble (27) est composé d'un bloc (23) disposé entre deux plaques conductrices (25, 25'), la plaque (25') dirigée vers l'intérieur de ladite enceinte (31) et le bloc (23) étant percés de façon à définir une pluralité de cellules (21) débouchant à l'intérieur de l'enceinte (31), cette enceinte (31) étant remplie d'un gaz équivalent au tissu biologique et traversée par au moins une anode (33), caractérisé en ce que le bloc (23) est réalisé dans une composition de polymères selon l'une quelconque des revendications 1 à 8.

**Patentansprüche**

1. Polymerzusammensetzung gleich einem biologischem Gewebe, und die einen großen spezifischen Widerstands aufweist, **dadurch gekennzeichnet**, daß sie ausgehend von einem Polyamid, Polypropylen, Epolen, Zuschlagmitteln und Ruß gebildet ist und das sie eine Atommassenzusammensetzung aufweist derart, daß Wasserstoff zwischen 6 und 14%, Kohlenstoff zwischen 55,5 und 86,5%, Stickstoff zwischen 2,5 und 4,5%, Sauerstoff zwischen 1,5 und 7,5%, Calcium zwischen 1,5 und 9,5% und Fluor zwischen 1 und 9% enthalten sind, wobei die Summe der Menge des Kohlenstoffs, des Sauerstoffs und des Fluors in der gesamten Atomzusammensetzung zwischen 72 und 90% liegt.

2. Polymerzusammensetzung gemäß Anspruch 1, **dadurch gekennzeichnet**, daß ihre Atommassenzusammensetzung derart ist, daß der Wasserstoff zwischen 8 und 12%, Kohlenstoff zwischen 63,5 und 78,5%, Stickstoff zwischen 3 und 4%, Sauerstoff zwischen 3 und 6%, Calcium zwischen 3,5 und 7,5% und Fluor zwischen 3 und 7% enthalten sind, wobei die Summe der Menge des Kohlenstoffs, des Sauerstoffs und des Fluors in der Gesamtzusammensetzung zwischen 76,5 und 85,5% liegt.

3. Polymerzusammensetzung gemäß Anspruch 2, **dadurch gekennzeichnet**, daß ihre Atommassenzusammensetzung ungefähr 10,3% Wasserstoff, 71% Kohlenstoff, 3,5% Stickstoff, 4,5% Sauerstoff, 5,5% Calcium und 5,2 Fluor ist.

4. Polymerzusammensetzung gemäß Anspruch 1, **dadurch gekennzeichnet**, daß der Ruß in der Form eines freien Pulvers vorhanden ist.

5. Polymerzusammensetzung nach irgendeinem der vorhergehenden Ansprüche, **dadurch gekennzeichnet**, daß ihr spezifischer Widerstand zwischen 10 M Ohm.cm und 40 G Ohm·cm liegt.

6. Polymerzusammensetzung gemäß Anspruch 1, **dadurch gekennzeichnet**, daß das Polyamid die chemische For-

mel [-CH$_2$)-CO-NH-]$_n$ erfüllt.

**7.** Polymerzusammensetzung gemäß Anspruch 1, **dadurch gekennzeichnet**, daß das Polypropylen die chemische Formel [-CH$_2$)-CH(CH$_3$)]$_n$ erfüllt.

**8.** Polymerzusammensetzung gemäß Anspruch 1, **dadurch gekennzeichnet**, daß der Zuschlag Calciumfluorid ist.

**9.** Verwendung der Polymerzusammensetzung gemäß irgendeinem der Ansprüche 1 bis 8 bei der Herstellung wenigstens eines Teils der Kathode (3", 23) eines Proportionalzählers gleich einem biologischem Gewebe.

**10.** Proportionalzähler, gleich einem biologischem Gewebe, vom monozellularen Typ, der eine geschlossene Kammer (1) aufweist, die von einer Kathode (3) festgelegt ist, die einen Körper (3') länglicher Form und zwei Basisteile (3") umfaßt, die die zwei Enden dieses Körpers verschließen, wobei die Kammer (1) mit einem Gas (11), das einem biologischem Gewebe äquivalent ist, gefüllt ist und in Längsrichtung von einer Anode (5) durchquert ist, **dadurch gekennzeichnet**, daß die zwei Basisteil (3") aus einer Polymerzusammensetzung gemäß irgendeinem der Ansprüche 1 bis 8 gebildet sind.

**11.** Proportionalzähler gleich einem biologischem Gewebe vom multizellularen Typ, der eine geschlossene Kammer (31) aufweist, die von einem Rahmen (29) und wenigstens zwei Einheiten (27) begrenzt ist, wobei jede Einheit (27) aus einem Block (23) gebildet ist, der zwischen zwei leitenden Platten (25, 25') angeordnet ist, wobei die Platte (25') zum Inneren der genannten Kammer (31) gerichtet ist und der Block (23) derart durchbohrt ist, daß er eine Mehrzahl Zellen (21) festlegt, die in das Innere der Kammer(31) münden, wobei diese Kammer (31) mit einem Gas gefüllt ist, das einem biologischem Gewebe äquivalent ist, und von wenigstens einer Anode (33) durchquert ist, **dadurch gekennzeichnet,** daß der Block (23) aus einer Polymerzusammensetzung gemäß irgendeinem der Ansprüche 1 bis 8 hergestellt ist.

## Claims

**1.** Biological tissue-equivalent polymer composition with a high resistivity, characterized in that it is formed from a polyamide, polypropylene, epolene, charges and carbon black and in that it has a mass atomic composition such that the hydrogen is between 6 and 14%, the carbon between 55.5 and 86.5%, the nitrogen between 2.5 and 4.5%, the oxygen between 1.5 and 7.5%, the calcium between 1.5 and 9.5% and the fluorine between 1 and 9%, the sum of the quantities of carbon, oxygen and fluorine in the total atomic composition being between 72 and 90%.

**2.** Polymer composition according to claim 1, characterized in that its mass atomic composition is such that the hydrogen is between 8 and 12%, the carbon between 63.5 and 78.5%, the nitrogen between 3 and 4%, the oxygen between 3 and 6%, the calcium between 3.5 and 7.5% and the fluorine between 3 and 7%, the sum of the carbon, oxygen and fluorine quantities in the total composition being between 76.5 and 85.5%.

**3.** Polymer composition according to claim 2, characterized in that its mass atomic composition is approximately 10.3% hydrogen, 71% carbon, 3.5% nitrogen, 4.5% oxygen, 5.5% calcium and 5.2% fluorine.

**4.** Polymer composition according to claim 1, characterized in that the carbon black is in the form of a free powder.

**5.** Polymer composition according to any one of the preceding claims, characterized in that its resistivity is between 10 M Ohms.cm and 40 G Ohms.cm.

**6.** Polymer composition according to claim 1, characterized in that the polyamide complies with the chemical formula [-(CH$_2$) -CO-NH-]$_n$.

**7.** Polymer composition according to claim 1, characterized in that the polypropylene complies with the chemical formula [-CH$_2$-CH(CH$_3$)-]$_n$.

**8.** Polymer composition according to claim 1, characterized in that the charge is calcium fluoride.

**9.** Use of the polymer composition according to any one of the claims 1 to 8 in the production of at least part of the cathode (3",23) of a biological tissue-equivalent proportional counter.

10. Monocellular, biological tissue-equivalent proportional counter comprising a sealed enclosure (1), defined by a cathode (3) having an elongated body (3') and two bases (3") sealing the two ends of said body, the enclosure (1) being filled with a biological tissue-equivalent gas (11) and being longitudinally traversed by an anode (5), characterized in that the two bases (3") are made from a polymer composition according to any one of the claims 1 to 8.

11. Multicellular, biological tissue-equivalent proportional counter comprising a sealed enclosure (31), defined by a frame (29) and at least two assemblies (27), each assembly (27) being formed from a block (23) located between two conductive plates (25,25'), the plate (25') directed towards the interior of said enclosure (31) and the block (23) being perforated so as to define a plurality of cells (21) issuing into the enclosure (31), said enclosure (31) being filled with a biological tissue-equivalent gas and traversed by at least one anode (33), characterized in that the block (23) is made from a polymer composition according to any one of the claims 1 to 8.

FIG. 1

FIG. 6

FIG. 2

FIG. 3

FIG. 4

FIG. 5